# EUROPÄISCHE PATENTANMELDUNG

(11) **EP 1 361 781 A1**
(43) Veröffentlichungstag der Anmeldung: **12.11.2003**
(21) Anmeldenummer: 03010169.5
(22) Anmeldetag: 05.05.2003
(51) Int. Cl.: H05B 41/285, H05B 41/298, H02M 1/00

(54) **Schaltungsanordnung zum Betrieb von Entladungslampen**

(30) Priorität: 07.05.2002 DE 10220471
(71) Anmelder: Patent-Treuhand-Gesellschaft für elektrische Glühlampen mbH, 81543 München (DE)
(72) Erfinder: Schmitt, Harald, 80689 München (DE)

(57) **Zusammenfassung**

Bei Schaltungsanordnungen zum Betrieb von Gasentladungslampen (Lp) wird zur Leistungsfaktorkorrektur häufig eine Ladungspumpe (D5, D6, C31, C32) eingesetzt. Ist dies der Fall so kommt es bei schlecht zündenden Lampen (Lp) zu einer Spannungsüberhöhung an einem Speicherkondensator (C1). Dies wird erfindungsgemäß durch einen Kaltleiter (KL) parallel zu Dioden (D5, D6) der Ladungspumpe vermieden.

## Beschreibung

### Technisches Gebiet

Die Erfindung geht aus von einer Schaltungsanordnung gemäß dem Oberbegriff des Anspruchs 1. Es handelt sich dabei insbesondere um eine Schaltungsanordnung, die in einem Betriebsgerät für Gasentladungslampen eingesetzt werden kann, wobei die Erfindung Nachteile bei der Zündung von Gasentladungslampen beseitigt, die mit dem Einsatz einer Ladungspumpe zur Verbesserung des Leistungsfaktors einhergehen.

### Stand der Technik

Schaltungsanordnungen für Gasentladungslampen, im folgenden kurz Lampen genannt, die an einer Netzspannung betrieben werden, die beispielsweise einen Effektivwert für die Spannung von 230V und eine Frequenz von 50Hz aufweist, enthalten im allgemeinen einen Gleichrichter und einen Wechselrichter. Derartige Schaltungsanordnungen unterliegen einschlägigen Normen bezüglich der Netzstrom-Oberschwingungen und damit des Leistungsfaktors (z.B. IEC 1000-3-2), was einen zusätzlichen Schaltungsaufwand erfordert. Eine kostengünstige Möglichkeit diese Normen einzuhalten besteht durch Schaltungstopologien, die in der Literatur Ladungspumpen genannt werden. Eine ausführliche Beschreibung der Wirkungsweise und von Ausführungsbeispielen ist beispielsweise der folgenden Literatur zu entnehmen: Qian J., Lee F. C.: *Charge Pump Power-Factor-Correction Technologies, Part I: Concept and Principle, Part II: Ballast Applications*, IEEE Transactions on Power Electronics, Vol. 15, No. 1, pp 121-139, New York, USA,

Power Electronics, Vol. 15, No. 1, pp 121-139, New York, USA, 2000. Das Prinzip einer Ladungspumpe besteht darin, der Netzspannung während einer ersten Halbperiode einer Hochfrequenzschwingung, die wesentlich höher ist, als die Netzfrequenz, Energie zu entnehmen, in einem Pumpelement zwischenzuspeichern und während einer zweiten Halbperiode an einen Speicherkondensator abzugeben. Damit ist es möglich einen näherungsweise sinusförmigen Verlauf des Netzstroms zu erzielen und damit Werte für die Netzstromoberschwingungen und den Leistungsfaktor zu erreichen, wie sie in den Normen verlangt werden.

Solange die Ladungspumpe in Betrieb ist, gibt sie laufend Energie an den Speicherkondensator ab. Diese Energie wird im Normalbertrieb, d. h. während die Lampe brennt, von der Lampe abgenommen. Es bildet sich ein Gleichgewichtszustand aus, der sich in einem konstanten Mittelwert der Spannung am Speicherkondensator ausdrückt, wobei der Mittelwert über eine halbe Netzperiode zu bilden ist. Bei der Zündung der Lampe wird an der Lampe eine hohe Spannung benötigt, jedoch nimmt die Lampe in diesem Zustand keine Energie auf. Da die Ladungspumpe laufend Energie an den Speicherkondensator liefert, steigt die Spannung am Speicherkondensator während der Zündung der Lampe. Damit stoßen in der Schaltungsanordnung vorwendete Bauelemente u. U. an ihre Belastungsgrenze. Insbesondere Bauelemente wie der Speicherkondensator selbst und in der Schaltungsanordnung verwendete elektronische Schalter werden aus Kostengründen mit einer möglichst niedrigen maximalen Spannungsbelastung ausgelegt. Bei einer Lampe die nur zögernd oder gar nicht zündet, besteht somit die Gefahr der Zerstörung der Schaltungsanordnung, da die Spannung am Speicherkondensator die maximal zulässige Spannung von Bauelementen überschreitet. Diese Gefahr ist bei Schaltungsanordnungen, die keine Vorheizung der Elektrodenwendeln der Lampe vornehmen, erhöht. Durch eine Vorheizung der Elektrodenwendeln wird die für eine Zündung nötige Spannung an der Lampe reduziert und damit der Zündvorgang verkürzt. Bei Schaltungsanordnungen, die keine Vorheizung der Elektrodenwendeln vornehmen, ist der Zündvorgang länger und damit die Spannung höher, die sich während der Zündung am Speicherkondensator aufbaut. Geräte, die derartige Schaltungsanordnungen enthalten werden auch Kaltstartgeräte genannt. Gut zündende Lampen, sind Lampen bei denen der Zündvorgang nach 1ms abgeschlossen ist. Schlecht zündende Lampen benötigen Zündvorgang nach 1ms abgeschlossen ist. Schlecht zündende Lampen benötigen teilweise bis zu 100ms für die Zündung.

Um eine Schaltungsanordnung mit Ladungspumpe vor der Zerstörung durch eine nicht oder schlecht zündende Lampe zu sichern, ist es üblich die Schaltungsanordnung mit einer Abschaltung auszustatten. Durch die Abschaltung wird in der Regel die Spannung am Speicherkondensator überwacht. Bei Überschreitung des Werts der Spannung am Speicherkondensator über einen vorgegebenen Abschaltwert, wird die Schaltungsanordnung außer Betrieb gesetzt. Damit besteht allerdings das Problem, dass insbesondere bei Kaltstartgeräten der Betrieb von Lampen, die einen längeren Zündvorgang aufweisen, nicht sichergestellt ist.

Im Stand der Technik wird zur Lösung dieses Problems ein Pumpsteuerungsschalter vorgeschlagen, über den im geschlossenen, d. h. niederohmigen Zustand, ein Pumpunterdrückungsstrom fließt. Der Pumpsteuerungsschalter ist im Stand der Technik als elektronischer Schalter, beispielsweise als MOSFET ausgeführt. Der Pumpunterdrückungsstrom bewirkt im wesentlichen, dass das Pumpelement dem Speicherkondensator nicht nur Energie liefert, sondern auch Energie entziehen kann und somit die Ladungspumpe in ihrer Funktionsfähigkeit eingeschränkt oder ganz außer Betrieb gesetzt wird. Die Ladungspumpe enthält im allgemeinen die Serienschaltung aus einer ersten und einer zweiten Pumpdiode. Diese Serienschaltung ist zwischen die Netzspannung und den Speicherkondensator geschaltet. Der Verbindungspunkt der Pumpdiode wird über das Pumpelement mit der Hochfrequenzschwingung beaufschlagt. Der Pumpsteuerungsschalter wird parallel zur Serienschaltung der Pumpdioden geschaltet.

Prinzipiell ist es möglich die Funktionsfähigkeit der Ladungspumpe auch dadurch zu unterdrücken, dass seriell oder parallel zum Pumpelement ein Schalter angeordnet wird. Da ein Pumpelement in der Regel jedoch außer der Funktion in der Ladungspumpe auch andere Einflüsse und Funktionen in der Schaltungsanordnung hat, wird von dieser Möglichkeit in Praxis nicht Gebrauch gemacht.

Es ist auch möglich, dass die Ladungspumpe nicht nur eine Serienschaltung von

Pumpdioden enthält, sondern mehrere parallel geschaltete Serienschaltungen von Pumpdioden, deren jeweilige Verbindungspunkte über unterschiedliche Pumpelemente mit einer Hochfrequenzschwingung beaufschlagt werden. In diesem Fall besteht die Ladungspumpe aus mehreren sog. Pumpzweigen. Durch den Pumpsteuerungsschalter werden alle Pumpzweige gleichermaßen beeinflusst.

In der Schrift US 5,396,153 (Shackle) wird der Pumpsteuerungsschalter von einer Steuereinrichtung gesteuert, die den Wert der Spannung am Speicherkondensator überwacht. Die Steuereinrichtung vergleicht den Wert der Spannung am Speicherkondensator mit einer vorgegebenen Schwelle und schaltet den Pumpsteuerungsschalter bei Überschreiten der Schwelle ein, wodurch die Ladungspumpe außer Betrieb gesetzt wird.

In der Schrift US 5,986,408 (Langeslag) wird der Pumpsteuerungsschalter von einer Steuereinrichtung gesteuert, die die Zündung der Lampe überwacht. Solange die Lampe nicht gezündet hat, ist der Pumpsteuerungsschalter geschlossen und damit die Ladungspumpe außer Betrieb.

In beiden Schriften zum Stand der Technik muss zusätzlich zum Pumpsteuerungsschalter ein Aufwand für dessen Steuerung getrieben werden.

### Darstellung der Erfindung

Es ist Aufgabe der vorliegenden Erfindung, eine Schaltungsanordnung gemäß dem Oberbegriff des Anspruchs 1 bereitzustellen, die mit geringem Aufwand einen Anstieg des Werts der Spannung am Speicherkondensator während der Zündung verhindert.

Diese Aufgabe wird durch eine Schaltungsanordnung mit den Merkmalen des Oberbegriffs des Anspruchs 1 durch die Merkmale des kennzeichnenden Teils des Anspruchs 1 gelöst. Besonders vorteilhafte Ausgestaltungen finden sich in den abhängigen Ansprüchen.

Erfindungsgemäß handelt es sich beim Pumpsteuerungsschalter nicht um einen elektronischen Schalter, der einen Steuereingang besitzt, der von einer Steuereinrichtung bedient werden muss. Vielmehr handelt es sich beim erfindungsgemäßen Pumpsteuerungsschalter um ein Bauelement, das durch den Pumpunterdrückungsstrom während einer Aufheizzeit aufgeheizt wird. Erreicht der, erfindungsgemäße Pumpsteuerungsschalter eine vorgegeben Schalttemperatur, so steigt sein Widerstand an, wodurch der Pumpunterdrückungsstrom reduziert und damit die Ladungspumpe wirksam wird. Vorteilhaft benötigt der erfindungsgemäße Pumpsteuerungsschalter keine Steuereinrichtung, wie dies im Stand der Technik der Fall ist. Selbsttätig unterdrückt er während seines Aufheizvorganges die Funktionsfähigkeit der Ladungspumpe und verhindert in dieser Zeit ein Ansteigen des Werts der Spannung am Speicherkondensator. Die Aufheizzeit ist so bemessen, dass auch eine schlecht zündende Lampe sicher gezündet werden kann. Hat die Lampe nach der Aufheizzeit nicht gezündet, so handelt es sich um eine defekte Lampe oder es liegt ein anderer Fehlerfall vor und die Schaltungsanordnung muss außer Betrieb gesetzt werden. Dies kann durch eine Abschaltvorrichtung geschehen, die den Wert der Spannung am Speicherkondensator überwacht. Entscheidend ist, dass diese Abschaltvorrichtung nicht zur Steuerung der Ladungspumpe dient, sondern ausschließlich im Fehlerfall eingreift. Der erfindungsgemäße Pumpsteuerungsschalter benötigt zu seiner Steuerung keine Steuereinrichtung und bietet somit eine kostengünstige Möglichkeit auch schlecht zündende Lampen mit Schaltungsanordnungen zu zünden, die eine Ladungspumpe enthalten.

Bevorzugt werden für den erfindungsgemäßen Pumpsteuerungsschalter sog. Kaltleiter verwendet, die in der Literatur auch als PTC (Positive Temperature Coefficient) bezeichnet werden. Bei der Inbetriebnahme der Schaltungsanordnung weist der Kaltleiter eine Temperatur auf, bei der er einen Widerstand besitzt dessen Wert so gering ist, dass ein wirksamer Pumpunterdrückungsstrom fließen kann. Durch diesen Pumpunterdrückungsstrom wird der Kaltleiter aufgeheizt. Kaltleiter besitzen naturgemäß einen nichtlinearen Zusammenhang zwischen Temperatur und Widerstandswert. Demgemäss existiert eine oben beschriebene Schalttemperatur. Erreicht der Kaltleiter diese Schalttemperatur so steigt sein Widerstand auf Werte, die keinen wirksamen Pumpunterdrückungsstrom mehr fließen lassen und somit die Ladungspumpe ihrer Bestimmung gemäß arbeiten kann. Die Verlustleitung im Kaltleiter, die Schalttemperatur und die thermische Trägheit des Kaltleiters sind erfindungsgemäß so aufeinander abgestimmt, dass die Schalttemperatur nach einer Zeit erreicht wird, die ausreichend ist, um eine schlecht zündende Lampe zu zünden.

Prinzipiell kann auch ein Heißleiter (NTC) zur Steuerung der Ladungspumpe eingesetzt werden, beispielsweise seriell zum Pumpelement geschaltet. Dabei treten jedoch zum einen, die bereits oben aufgeführten Nachteile auf, andererseits ist die Nichtlinearität von Heißleitern nicht derart ausgeprägt, dass sich eine eindeutige Schalttemperatur ausbildet. Damit ist die Funktionsweise der Ladungspumpe nicht zuverlässig reproduzierbar.

Bevorzugt wird der erfindungsgemäße Pumpsteuerungsschalter parallel zur Serienschaltung der Pumpdioden geschaltet. Zur Gleichrichtung der Netzspannung besitzt eine gattungsgemäße Schaltungsanordnung einen Gleichrichter, der im allgemeinen aus in einer Brückenschaltung angeordneten Gleichrichterdioden besteht. Aus der Literatur ist bekannt, dass die Aufgabe der der Netzspannung zugewandten Pumpdiode auch durch Gleichrichterdioden übernommen werden kann. Von der Serienschaltung der Pumpdioden ist in diesem Fall nur noch die dem Speicherkondensator zugewandte Pumpdiode zugänglich. Der erfindungsgemäße Pumpsteuerungsschalter ist in diesem Fall parallel zu dieser Pumpdiode geschaltet.

Bei Ladungspumpen mit mehreren Pumpzweigen kann es wünschenswert sein durch den Pumpsteuerungsschalter nur einen Pumpzweig zu beeinflussen. Dies ist beispielsweise dann vorteilhaft, wenn zur Zündung der Lampe eine gegenüber dem Spitzenwert der Netzspannung erhöhte Spannung nötig ist. Zur wirksamen Reduzierung der Funktionsweise eines Pumpzweiges wird der erfindungsgemäße Pumpsteuerungsschalter parallel zu der Pumpdiode geschaltet die zum betreffenden Pumpzweig gehört und dem Speicherkondensator zugewandt ist.

### Kurze Beschreibung der Zeichnungen

Im folgenden soll die Erfindung anhand von Ausführungsbeispielen unter Bezugnahme auf Zeichnungen näher erläutert werden. Es zeigen:
- Figur 1: ein Ausführungsbeispiel einer erfindungsgemäßen Schaltungsanordnung
- Figur 2: ein weiteres Ausführungsbeispiel einer erfindungsgemäßen Schaltungsanordnung
- Figur 3: ein weiteres Ausführungsbeispiel einer erfindungsgemäßen Schaltungsanordnung
- Figur 4: ein weiteres Ausführungsbeispiel einer erfindungsgemäßen Schaltungsanordnung

Im folgenden werden Transistoren durch den Buchstaben T, Dioden durch den Buchstaben D, Kondensatoren durch den Buchstaben C, Drosseln durch den Buchstaben L, Potenziale durch den Buchstaben P jeweils gefolgt von einer Zahl bezeichnet. Auch werden im Folgenden für gleiche und gleichwirkende Elemente der verschiedenen Ausführungsbeispiele durchweg gleiche Bezugszeichen verwendet.

### Bevorzugte Ausführung der Erfindung

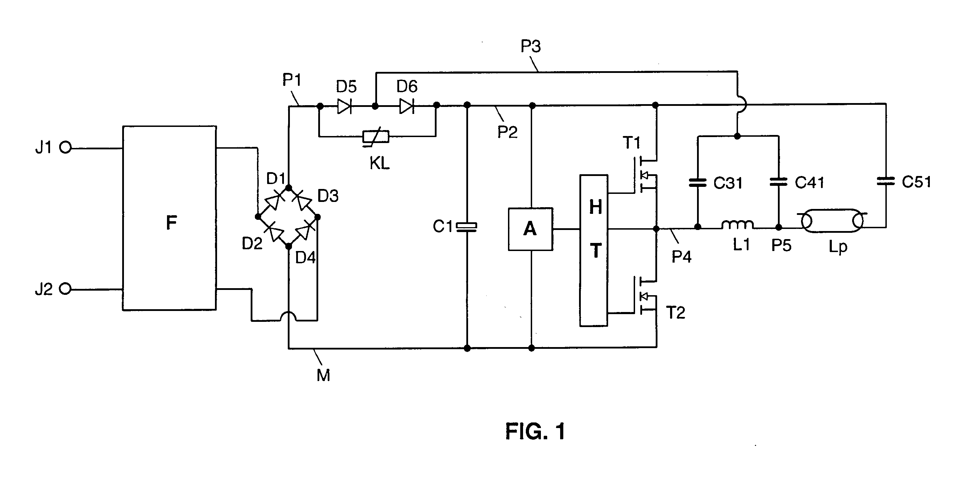

In Figur 1 ist eine erfindungsgemäße Schaltungsanordnung dargestellt. An den Eingangsklemmen J 1 und J2 ist der Anschluss einer Netzspannung vorgesehen, die in eine Filtereinrichtung F eingespeist wird. Die Filtereinrichtung F dient zur Unterdrückung von Funkstörungen. Der Ausgang der Filtereinrichtung F ist mit einem Gleichrichter bestehend aus den Dioden D1, D2, D3 und D4 verbunden. Die Dioden D1-D4 sind in einer bekannten Brückengleichrichter-Schaltung verschaltet. Über die Dioden D1 und D3 wird an einem Potenzial P1 das positive Potenzial der gleichgerichteten Netzspannung zur Verfügung gestellt. Ein Massepotenzial M ist mit den Dioden D2 und D4 verbunden. Zwischen P1 und einem Potenzial P2 ist die Serienschaltung einer ersten Pumpdiode D5 und einer zweiten Pumpdiode D6 geschaltet. Die Polung der Pumpdioden ist so gewählt, dass die Netzspannung in der Schaltungsanordnung einen Stromfluss erzeugen kann. Zwischen dem Potenzial P2 und dam Massepotenzial M ist ein Speicherkondensator C1 geschaltet.

Die Spannung an C1 speist einen Wechselrichter, der im folgenden beschreiben wird. Zwischen P2 und dem Massepotenzial M ist die Serienschaltung eines ersten und eines zweiten Halbleiterschalters T1 und T2 geschaltet, die eine sog. Halbbrücke bilden. Am Verbindungspunkt der Halbleiterschalter bildet sich das Potenzial P4 aus. Die Halbleiterschalter sind im Beispiel als MOSFET ausgeführt. Sie können jedoch auch beispielsweise als Bipolartransistoren oder IGBTs ausgeführt sein. T1 und T2 werden an den Gates abwechselnd von einem Halbbrückentreiber HT angesteuert. Den Takt dieser Ansteuerung gibt eine Ansteuerschaltung A vor. Diese kann ihren Takt unabhängig oder abhängig von Ausgangsgrößen der Halbbrücke erzeugen. Im letzteren Fall spricht man von einem selbsterregten Halbbrückenwechselrichter. Die Funktionsweise eines derartigen Wechselrichters ist beispielsweise in der Schrift EP 781 077 (Schmitt) erläutert. Zwischen dem Potenzial P4 und einem Potenzial P5 ist eine Lampendrossel L1 geschaltet. Zwischen P5 und P2 ist die Serienschaltung einer Lampe Lp und eines Koppelkondensators C51 geschaltet. Die Hochfrequenzschwingungen an P4 und P5 werden über die Kondensatoren C31 und C41 dem Verbindungspunkt der Pumpdioden D5 und D6 zugeführt, wo sich das Potenzial P3 ausbildet. Im vorliegenden Fall bilden C31 und C41 die Pumpelemente.

Erfindungsgemäß ist parallel zur Serienschaltung der Pumpdioden D5 und D6 der Kaltleiter KL geschaltet. Solange er kalt ist fließt bei niedrigem Potenzial an P3 ein Pumpunterdrückungsstrom von P2 über den Kaltleiter KL und über D5. Dadurch wird die Funktionsweise der Ladungspumpe bestehend aus den Elementen D5, D6, C31 und C41 wirksam reduziert und ein stetiges Ansteigen der Spannung am Speicherkondensator beim Zündvorgang wird vermieden. Durch den Pumpunterdrückungsstrom heizt sich der Kaltleiter KL auf. Erreicht er eine Schalttemperatur, so steigt sein Widerstand stark an. Der Strom, der bei niedrigem Potenzial an P3 über den Kaltleiter fließt, ist dann gegenüber dem Strom, der aus der Netzspannung bezogen wird vernachlässigbar. Die Funktionsweise der Ladungspumpe ist nicht mehr wirksam beeinträchtigt. Im Ausführungsbeispiel aus Figur 1 wird die Hochfrequenzschwingung an P4 und an P5 für die Ladungspumpe ausgenutzt. Es ist auch möglich, nur eine der beiden Hochfrequenzschwingungen zu nutzen. Der Kondensator, der mit der nicht benutzten Hochfrequenzschwingung verbunden ist, kann dann mit P2 gekoppelt werden.

Eine weitere Variationsmöglichkeit besteht darin, dass die Pumpdioden D5 und D6 nicht in den positiven Ausgang des Gleichrichters eingeschleift sind, sondern in den negativen. In diesem Fall wird das Massepotenzial M über die Serienschaltung der Pumpdioden mit dem negativen Ausgang des Gleichrichters, d.h. dem Verbindungspunkt der Dioden D2 und D4, verbunden.

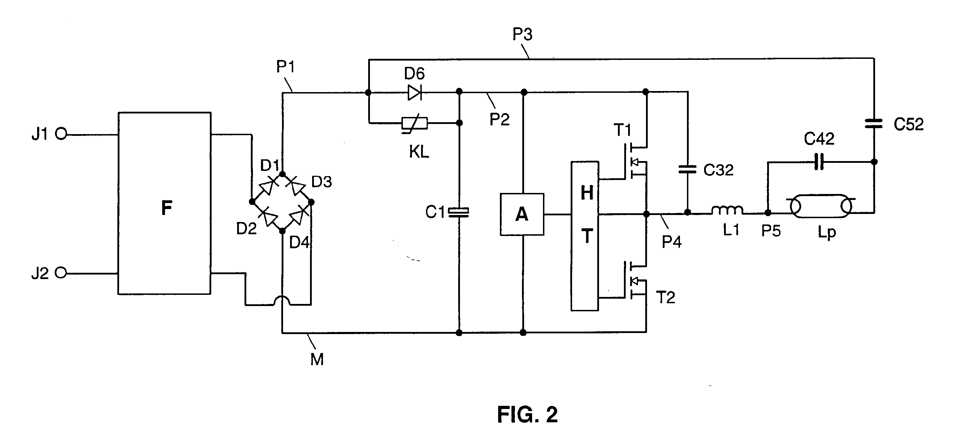

In Figur 2 ist ein weiteres Beispiel für eine erfindungsgemäße Schaltungsanordnung dargestellt. Gegenüber dem Ausführungsbeispiel aus Figur 1 sind zwei Veränderungen zu verzeichnen:
1. Als Hochfrequenzschwingung für die Ladungspumpe wird nicht mehr das Potenzial an P4 und P5 benutzt. Vielmehr wird die Hochfrequenzschwingung des Stroms durch den Koppelkondensator C52 für die Ladungspumpe benutzt. C52 ist demnach nicht mehr mit P2, sondern mit der Anode von D6 verbunden. Als Pumpelement wirkt nun C52. C32 ist mit P2 verbunden und C42 ist parallel zur Lampe Lp geschaltet.
2. Die Pumpdiode D5 ist gegenüber dem Ausführungsbeispiel aus Figur 1 entfallen. Ihre Funktion wird von den Gleichrichterdioden D1 und D3 übernommen. Damit fällt das Potenzial P1 mit dem Potenzial P3 zusammen. Erfindungsgemäß ist der Kaltleiter KL parallel zur Pumpdiode D6 geschaltet. Seine Funktionsweise ist analog zum Ausführungsbeispiel aus Figur 1.

Die beiden Veränderungen zwischen Figur 1 und Figur 2 sind nicht gekoppelt, sondern können unabhängig voneinander vorgenommen werden. Dies gilt gleichermaßen für alle aus der Literatur bekannten Variationen der Ladungspumpe.

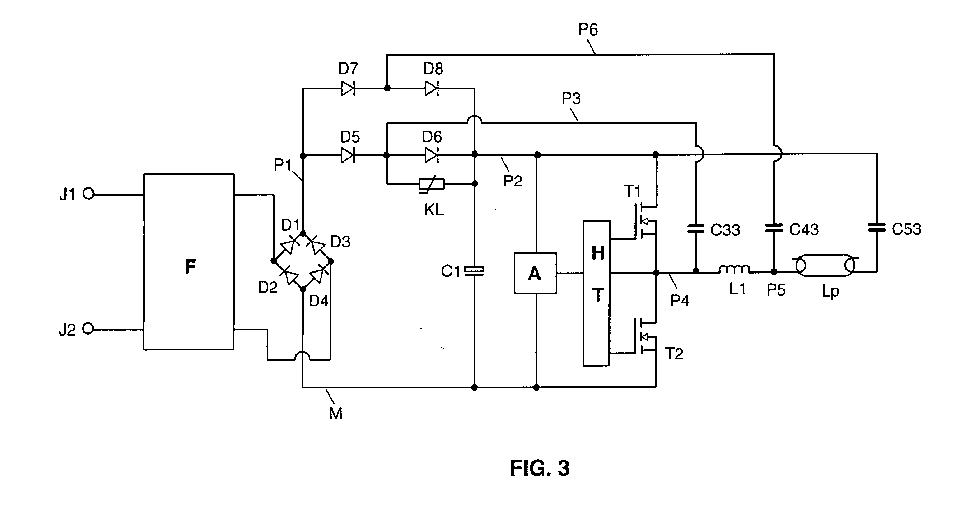

In Figur 3 ist ein weiteres Ausführungsbeispiel einer erfindungsgemäßen Schaltungsanordnung dargestellt. Gegenüber dem Ausführungsbeispiel aus Figur 1 besitzt die Schaltungsanordnung nun zwei Pumpzweige. Parallel zu den Pumpdioden D5 und D6 ist eine weitere Serienschaltung aus den Pumpdioden D7 und D8 geschaltet. Die Kondensatoren C33 und C43 sind im Vergleich zu Figur 1 nicht an einem Ende verbunden. Nur noch der Kondensator C33 ist mit dem Potenzial P3 verbunden. Im zweiten Pumpzweig wird die Hochfrequenzschwingung des Potenzials P5 über den Kondensator C43 dem Potenzial P6 zugeführt, das die Verbindungsstelle der Pumpdioden D7 und D8 des zweiten Pumpzweigs bezeichnet.

Erfindungsgemäß ist der Kaltleiter KL nur parallel zur Pumpdiode D6 des ersten Pumpzweiges geschaltet. Damit wird gezielt nur die erste Ladungspumpe beeinflusst. Die zweite Ladungspumpe ist auch während der Zündung wirksam. Dies kann wünschenswert sein, um während des Zündvorgangs eine höhere Spannung am Speicherkondensator C1 zu erzielen und somit die Zündspannung erhöht wird.

Es ist auch möglich, dass der Kaltleiter KL parallel zur Pumpdiode D8 geschaltet ist. In diesem Fall wird der zweite Pumpzweig bis zur Aufheizung des Kaltleiters wirkungslos geschaltet.

## Patentansprüche

1. Schaltungsanordnung, zum Betrieb von Entladungslampen (Lp) an einer Netzspannung, mit folgenden Merkmalen:
• Wechselrichter (A, HT, T1, T2), mit einer Ladungspumpe (D5-D8, C31, C32, C33, C41, C42, C43, C51, C52, C53) zur Verbesserung des Leistungsfaktors,
• Pumpsteuerungsschalter (KL), der, falls er sich in einem niederohmigen Zustand befindet, einen Pumpunterdrückungsstrom führt, was eine wirksame Reduzierung der Funktionsweise der Ladungspumpe (D5-D8, C31, C32, C33, C41, C42, C43, C51, C52, C53) zur Folge hat,
**dadurch gekennzeichnet, dass** der Widerstandswert des Pumpsteuerungsschalters (KL) derart temperaturabhängig ist, dass durch den Pumpunterdrückungsstrom der Pumpsteuerungsschalters auf eine Schalttemperatur erwärmt wird bei der der Widerstand des Pumpsteuerungsschalters Werte annimmt, die den Pumpunterdrückungsstrom derart reduzieren, dass die Funktionsweise der Ladungspumpe (D5-D8, C31, C32, C33, C41, C42, C43, C51, C52, C53) nicht mehr wirksam beeinträchtigt wird.

2. Schaltungsanordnung gemäß Anspruch 1, **dadurch gekennzeichnet, dass** der Pumpsteuerungsschalter (KL) einen Kaltleiter enthält.

3. Schaltungsanordnung gemäß Anspruch 1 oder 2, **dadurch gekennzeichnet, dass** die Ladungspumpe zwei in Serie geschaltete Pumpdioden (D5, D6, D7, D8) enthält und der Pumpsteuerungsschalter (KL) parallel zur Serienschaltung der Pumpdioden geschaltet ist.

4. Schaltungsanordnung gemäß Anspruch 1 oder 2, **dadurch gekennzeichnet, dass** die Ladungspumpe (D5-D8, C31, C32, C33, C41, C42, C43, C51, C52, C53) zwei in Serie geschaltete Pumpdioden (D5, D6, D7, D8) enthält, die zwischen die Netzspannung und einen Speicherkondensator (C1) geschaltet sind und der Pumpsteuerungsschalter (KL) parallel zu der Pumpdiode (D6, D8) geschaltet ist, die mit dem Speicherkondensator (C1) gekoppelt ist

5. Schaltungsanordnung gemäß Anspruch 1 oder 2, **dadurch gekennzeichnet, dass** die Ladungspumpe (D5-D8, C31, C32, C33, C41, C42, C43, C51, C52, C53) mehrere Pumpzweige mit Pumpdioden (D5- D8) enthält, wovon mindestes eine parallel zu einem Pumpsteuerungsschalter (KL) geschaltet ist.

6. Verfahren zum Starten und Betreiben einer Entladungslampe (Lp) mit einer Schaltungsanordnung die einen Wechselrichter (A, HT, T1, T2), mit einer Ladungspumpe (D5-D8, C31, C32, C33, C41, C42, C43, C51, C52, C53) zur Verbesserung des Leistungsfaktors und einen Pumpsteuerungsschalter (KL) enthält **gekennzeichnet durch** folgende Schritte:
• Anschließen der Schaltungsanordnung an eine Netzspannung,
• **durch** den Pumpsteuerungsschalter (KL) fließt ein Pumpunterdrückungsstrom, der die Funktionsweise der Ladungspumpe (D5-D8, C31, C32, C33, C41, C42, C43, C51, C52, C53) wirksam beeinträchtigt,
• der Pumpunterdrückungsstrom erwärmt den Pumpsteuerungsschalter (KL),
• die Temperatur des Pumpsteuerungsschalter (KL) erreicht eine Schalttemperatur,
• bei der Schalttemperatur erhöht sich der Widerstandswert des Pumpsteuerungsschalters (KL),
• der Pumpunterdrückungsstrom wird **durch** den gestiegenen Widerstandswert des Pumpsteuerungsschalters (KL) reduziert,
• der Pumpunterdrückungsstrom sinkt ab auf einen Wert, der keine wirksame Beeinträchtigung der Funktionsweise der Ladungspumpe (D5-D8, C31, C32, C33, C41, C42, C43, C51, C52, C53) mehr darstellt.
